# EUROPEAN PATENT APPLICATION

(11) **EP 4 729 199 A1**
(43) Date of publication of application: **22.04.2026**
(21) Application number: 25205868.0
(22) Date of filing: 30.09.2025
(51) Int. Cl.: B21D 19/04, B21D 19/14, B21D 43/00, B21D 43/28, B21D 43/14, B23D 19/04, B23P 23/04

(54) **PLANT FOR TRIMMING AND EDGING METAL LAMINAR SEMI-FINISHED PRODUCTS**

(30) Priority: 18.10.2024 IT 202400023265
(71) Applicant: Omera S.r.l., 36015 Schio (VI) (IT)
(72) Inventor: FONTANA, Simone, 36035 MARANO VICENTINO (VI) (IT)
(74) Representative: Marchioro, Paolo

(57) **Abstract**

The present invention relates to a plant (10) for trimming and edging a metal laminar semi-finished product, comprising:
- support means (20) configured to support and reversibly block the semi-finished product along a substantially horizontal support plane; these support means (20) are configured to rotate the semi-finished product around a machining axis (I) orthogonal to the support plane;
- a first trimmer (30a) configured to cut the edge of the semi-finished product;
- a first edge bander (30b) configured to bend the edge of the semi-finished product.

**It** should be pointed out that the plant (10) still comprises:
- a first tool holder (30) to which the first trimmer (30a) and the first edge bander (30b) are fixed with an angular misalignment substantially equal to 90° and along the support plane;
- first rotation means (40) operatively connected to the first tool holder (30) and configured to rotate said first tool holder (30) around a first rotation axis (J) parallel to the machining axis (I);
- first translation means (50) operatively connected to the first rotation means (40) and configured to reversibly translate the first rotation means (40) towards the support means (20).

## Description

The invention relates to a plant for trimming and edging metal laminar semi-finished products.

Today, plants for trimming and edging metal laminar semi-finished products are known.

A similar plant of known type comprises:
- support means configured to support and reversibly block the semi-finished product along a substantially horizontal support plane; in particular, these support means are configured to rotate the semi-finished product around a machining axis orthogonal to the support plane;
- a trimmer configured to cut the edge of the semi-finished product;
- an edge bander configured to bend the edge of the semi-finished product. Such a plant, although well-known and appreciated, however, has a significant limit linked to the footprint of the plant itself.

In addition, the machining process of the semi-finished product requires a long time to complete it.

The task of the present invention is to develop a plant capable of obviating the mentioned drawbacks and limitations of the prior art.

In particular, it is an object of the present invention to realize a plant that has a smaller footprint than similar plants of known type.

Furthermore, an object of the invention is to develop a plant where the machining process of the semi-finished product requires a shorter time to complete it than what can be obtained through a plant of known type and with the same machining parameters.

The above task and objects are achieved by a plant according to claim 1. Further characteristics of the plant according to claim 1 are described in the dependent claims.

The aforesaid task and objects, together with the advantages that will be mentioned hereinafter, are highlighted by the description of an embodiment of the invention, which is given by way of non-limiting example with reference to the attached drawings, where:

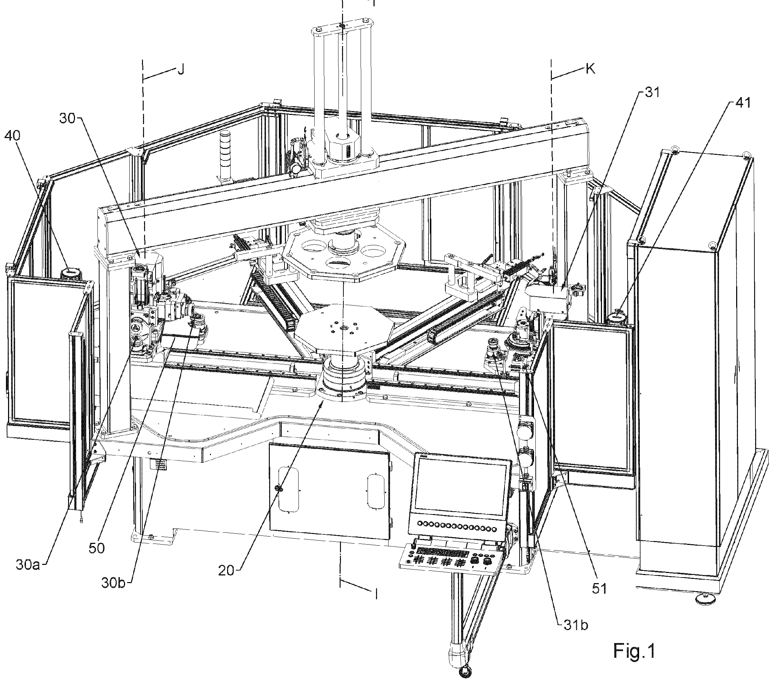

- figure 1 represents a front perspective view of a plant according to the invention;
- figure 2 represents a first detail of figure 1;
- figure 3 represents a second detail of figure 1.

With reference to the cited figures, a plant for trimming and edging a metal laminar semi-finished product according to the invention is indicated as a whole with the number 10.

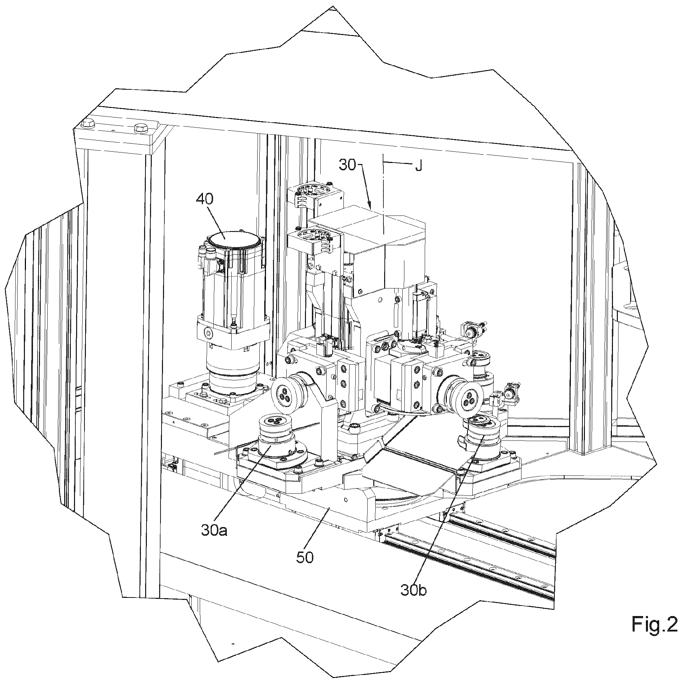

This plant 10 comprises:
- support means **20** configured to support and reversibly block the semi-finished product along a substantially horizontal support plane; in particular, said support means **20** are configured to rotate the semi-finished product around a machining axis I orthogonal to the aforesaid support plane; even more precisely, in the present embodiment of the invention, the support means **20** consist of a press mould holder;
- a first trimmer **30a,** visible in detail in figure 2, configured to cut the edge of said semi-finished product in such a way as to obtain a predefined shape of said semi-finished product;
- a first edge bander **30b,** always clearly visible in detail in figure 2, configured to bend the edge of said semi-finished product in such a way as to reinforce the edge of said semi-finished product.

It should be pointed out that the plant 10 still comprises:
- a first tool holder **30,** clearly visible in figure 2, to which the first trimmer **30a** and the first edge bander **30b** are fixed, mutually offset by an angle substantially equal to 90° around a first rotation axis J and along the aforesaid support plane;
- first rotation means **40,** always clearly visible in figure 2, operatively connected to the first tool holder **30** and configured to rotate the first tool holder **30,** and consequently the first trimmer **30a** and the first edge bander **30b,** around the aforesaid first rotation axis J parallel to the machining axis **I**;
- first translation means **50** operatively connected to the first rotation means **40** and configured to reversibly translate the first rotation means **40,** and consequently the first tool holder **30,** towards the support means **20;** more precisely, in the present embodiment of the invention, said first translation means **50** consist of a slide.

The integration of the first trimmer **30a** and of the first edge bander **30b** on the same tool holder **30** advantageously allows to reduce the overall footprint of the plant **10** and to make the machining process of the semi-finished product faster than what can be obtained through a plant of known type and with the same machining parameters.

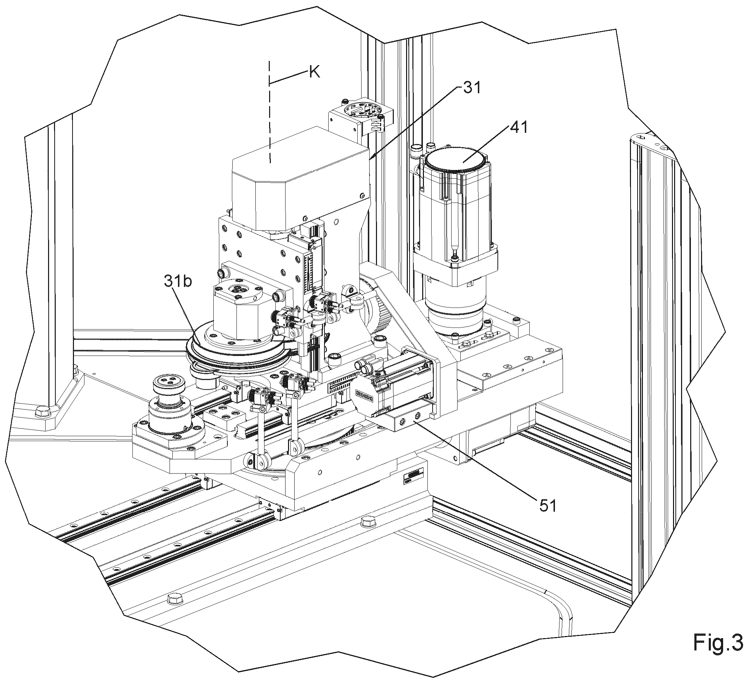

In the present embodiment of the invention, the plant **10** still comprises:
- a second edge bander **31b,** clearly visible in figure 3, configured to bend the edge of the semi-finished product;
- a second tool holder **31,** visible in figure 2, to which the second edge bander **31b** is fixed along the support plane;
- second rotation means **41,** always visible in figure 2, operatively connected to the second tool holder **31** and configured to rotate the second tool holder **31,** and consequently the second edge bander **31b,** around a second rotation axis **K** parallel to the machining axis **I;**
- second translation means **51** operatively connected to the second rotation means **41** and configured to reversibly translate said second rotation means **41,** and consequently the second tool holder **31,** towards the support means **20;** in particular, again with reference to the present embodiment of the invention, said second translation means **51** consist of a slide.

It should also be highlighted that the first tool holder **30** and the second tool holder **31** are mutually opposed with respect to the support means **20.**

This advantageously ensures that the aforesaid machining process is made even faster.

In the present embodiment of the invention, the plant **10** further comprises a second trimmer, not visible in the figures, configured to cut the edge of the semi-finished product; in particular, said second trimmer is fixed to the second tool holder **31** with an offset substantially equal to 90° around the aforesaid first rotation axis **J** with respect to the second edge bander **31b** and along the support plane.

As can be seen from the figures, the first rotation means **40** comprise a first actuator integral with the first translation means **50** and a first belt coupled to the first tool holder **30** in such a way as to rotate the first tool holder **30.**

In addition, the second rotation means **41** also comprise a second actuator integral with the second translation means **51** and a second belt coupled to the second tool holder **31** in such a way as to rotate the second tool holder **31.** This advantageously allows not to involve the first and the second actuator during the rotation of the first tool holder **30** and of the second tool holder **31,** respectively, thus guaranteeing a lower inertia of rotation of these elements.

In a second embodiment of the invention, not represented in the figures, the plant **10** comprises a first drill configured to drill the semi-finished product; in particular, the first drill is fixed to the first tool holder **30** with an offset substantially equal to 90° around the aforesaid first rotation axis **J** with respect to the first trimmer **30a** or, alternatively, to the first edge bander **30b** and along the aforesaid support plane.

Furthermore, the plant **10** still comprises a second drill configured to drill the semi-finished product; similarly to what has just been described, the second drill is fixed to the second tool holder **31** with an offset substantially equal to 90° around the aforesaid first rotation axis **J** with respect to the second trimmer **31a** or, alternatively, to the second edge bander **31b** and along the support plane. Practically, it has been established that the invention achieves the intended task and objects.

In particular, with the invention, a plant has been developed that has a smaller footprint than similar plants of known type.

Moreover, a plant has been developed where the machining process of the semi-finished product requires a shorter time to complete it than what can be obtained through a plant known type and with the same machining parameters.

## Claims

1. Plant (10) for trimming and edging a metal laminar semi-finished product, comprising:
- support means (20) configured to support and reversibly block said semi-finished product along a substantially horizontal support plane, said support means (20) being configured to rotate said semi-finished product around a machining axis (I) orthogonal to said support plane;
- a first trimmer (30a) configured to cut the edge of said semi-finished product;
- a first edge bander (30b) configured to bend the edge of said semi-finished product;
**characterized in that** it comprises:
- a first tool holder (30) to which said first trimmer (30a) and said first edge bander (30b) are fixed, mutually offset by a first angle around a first rotation axis (J) and along said support plane;
- first rotation means (40) operatively connected to said first tool holder (30) and configured to rotate said first tool holder (30) around said first rotation axis (J) parallel to said machining axis (I);
- first translation means (50) operatively connected to said first rotation means (40) and configured to reversibly translate said first rotation means (40) towards said support means (20).

2. Plant (10) according to claim 1, **characterized in that** said first angle is substantially equal to 90°.

3. Plant (10) according to claim 1 or 2, **characterized in that** it comprises:
- a second edge bander (31b) configured to bend the edge of said semi-finished product;
- a second tool holder (31) to which said second edge bander (31b) is fixed along said support plane;
- second rotation means (41) operatively connected to said second tool holder (31) and configured to rotate said second tool holder (31) around a second rotation axis (K) parallel to said machining axis (I);
- second translation means (51) operatively connected to said second rotation means (41) and configured to reversibly translate said second rotation means (41) towards said support means (20);
said first tool holder (30) and said second tool holder (31) being mutually opposed with respect to said support means (20).

4. Plant (10) according to any one of the preceding claims, **characterized in that** it comprises a second trimmer configured to cut the edge of said semi-finished product, said second trimmer being fixed to said second tool holder (31) with an offset by a second angle around said first rotation axis (J) with respect to said second edge bander (31b) and along said support plane.

5. Plant (10) according to claim 4, **characterized in that** said second angle is substantially equal to 90°.

6. Plant (10) according to any one of the preceding claims, **characterized in that** said first rotation means (40) comprise a first actuator integral with said first translation means (50) and a first belt coupled to said first tool holder (30) in such a way as to rotate said first tool holder (30).

7. Plant (10) according to any one of claims 3 to 6, **characterized in that** said second rotation means (41) comprise a second actuator integral with said second translation means (51) and a second belt coupled to said second tool holder (31) in such a way as to rotate said second tool holder (31).

8. Plant (10) according to any one of the preceding claims, **characterized in that** it comprises a first drill configured to drill said semi-finished product, said first drill being fixed to said first tool holder (30) with an offset by a third angle around said first rotation axis (J) with respect to said first trimmer (30a) or to said first edge bander (30b) and along said support plane.

9. Plant (10) according to claim 8, **characterized in that** said third angle is substantially equal to 90°.

10. Plant (10) according to any one of claims 4 to 9, **characterized in that** it comprises a second drill configured to drill said semi-finished product, said second drill being fixed to said second tool holder (31) with an offset by a fourth angle around said first rotation axis (J) with respect to said second trimmer (31a) or to said second edge bander (31b) and along said support plane.

11. Plant (10) according to claim 10, **characterized in that** said fourth angle is substantially equal to 90°.
